# EUROPEAN PATENT APPLICATION

(11) **EP 3 252 775 A1**
(43) Date of publication of application: **06.12.2017**
(21) Application number: 16838235.6
(22) Date of filing: 09.03.2016
(51) Int. Cl.: G11C 7/16

(54) **DIRECTIVITY RECORDING METHOD, APPARATUS AND RECORDING DEVICE**

(30) Priority: 26.08.2015 CN 201510530941
(71) Applicant: Huawei Technologies Co., Ltd., Longgang District Shenzhen, Guangdong 518129 (CN)
(72) Inventor: QIU, Cunshou, Shenzhen Guangdong 518129 (CN); MA, Hua, Shenzhen Guangdong 518129 (CN); CHANG, Qing, Shenzhen Guangdong 518129 (CN); HAN, Bo, Shenzhen Guangdong 518129 (CN)
(74) Representative: Körber, Martin Hans
(86) International application number: PCT/CN2016/075948
(87) International publication number: WO 2017/031972

(57) **Abstract**

This application discloses a directional recording method and apparatus, and a recording device. The recording device collects a voice of a target acoustic source by using a microphone array of the recording device. The method includes: generating an initial sound pickup beam by using a beam forming algorithm, where the initial sound pickup beam points towards the target acoustic source; recording an initial pointing direction of the initial sound pickup beam; and detecting that a direction towards which the recording device faces changes, and adjusting, according to the change of the direction towards which the recording device faces, the initial sound pickup beam to obtain a target sound pickup beam, where the target sound pickup beam points towards the target acoustic source. Compared with the prior art, according to the directional recording method and apparatus, and the recording device provided in the embodiments of the present invention, a pointing direction of a sound pickup beam can be adjusted according to a change of a direction towards which the recording device faces, thereby ensuring that the sound pickup beam is always pointing towards a target acoustic source, and avoiding that a recording effect is deteriorated because of the change of the direction towards which the recording device faces.

## Description

This application claims priority to Chinese Patent Application No. 201510530941.0, entitled "DIRECTIONAL RECORDING METHOD AND APPARATUS, AND RECORDING DEVICE", filed on August 26, 2015, which is incorporated herein by reference in its entirety.

### TECHNICAL FIELD

The present invention relates to the field of signal processing, and in particular, to a directional recording method and apparatus, and a recording device.

### BACKGROUND

To meet a requirement of recording in a noisy environment, recording devices having directional recording functions are applied more widely. A recording device having a directional recording function is generally provided with a microphone array including multiple microphones. When the recording device performs recording, sound signals may be picked up by using the microphones in the microphone array. A phase and amplitude of a sound signal picked up by each microphone is separately adjusted by using a beam forming (Beam Forming) algorithm, so that a finally generated sound signal may have a relatively high signal-to-noise ratio within a specific direction range, pickup effects of reserving a sound signal propagated within a specific direction range and attenuating or masking sound signals propagated from other directions are achieved, and the directional recording function is implemented. When performing recording by using the directional recording function, a recording device merely reserves a sound signal propagated within a specific direction range, and the direction range within which the sound signal is reserved is generally a conical region. Therefore, the conical region is generally figuratively referred to as a sound pickup beam, and a direction in which a sound signal has a largest signal-to-noise ratio is generally referred to as a pointing direction of the sound pickup beam.

For convenience of use of users, in the prior art, when a recording device performs recording by using the directional recording function, a pointing direction of a sound pickup beam is generally the same as a direction towards which the recording device faces. The direction towards which the recording device faces may be a pointing direction of any component of the recording device, for example, a pointing direction of a headend of the recording device. After a user makes, by adjusting an attitude of a recording device, the recording device face towards a target acoustic source, the recording device can record a sound emitted by the target acoustic source by using the directional recording function, and masks sounds emitted by other noise sources, thereby achieving a relatively good recording effect. For example, when a recording device is used to record a sound of a spokesman in a site such as a conference or a lecture, a target acoustic source is the spokesman. Therefore, when performing recording by using the recording device in the site, a user may first adjust a direction towards which the recording device faces, so that the recording device faces towards the spokesman. When performing recording by using the directional recording function, the recording device generates a sound pickup beam indicating the spokesman, so that the recording device merely reserves a sound signal emitted by the spokesman, and attenuates or masks sound signals emitted by other noise sources, thereby achieving a relatively good recording effect.

However, in actual use, a direction towards which a recording device faces is easy to change for some reasons, such as a collision between the recording device and another object. Especially, after a portable recording device such as a recording pen or a mobile phone collides with another object, a direction towards which the recording device faces changes greatly. Once a direction towards which a recording device faces changes, a pointing direction of a sound pickup beam changes accordingly, and consequently the sound pickup beam does not point towards a target acoustic source. When the sound pickup beam does not point towards the target acoustic source, a sound signal propagated from a direction of the target acoustic source is picked up by the sound pickup beam, while a sound signal propagated from a direction of the target acoustic source is attenuated or masked, deteriorating a recording effect.

### SUMMARY

Embodiments of the present invention provide a directional recording method and apparatus, and a recording device, to resolve a problem that, in an existing directional recording method, a recording effect is easily deteriorated when there is a change of a direction towards which a recording device faces.

According to a first aspect, an embodiment of the present invention provides a directional recording method, where the recording device collects a voice of a target acoustic source by using a microphone array of the recording device, and the method includes: generating an initial sound pickup beam by using a beam forming algorithm, where the initial sound pickup beam points towards the target acoustic source; recording an initial pointing direction of the initial sound pickup beam; and detecting that a direction towards which the recording device faces changes, and adjusting, according to the change of the direction towards which the recording device faces, the initial sound pickup beam to obtain a target sound pickup beam, where the target sound pickup beam points towards the target acoustic source.

With reference to the first aspect, in a first possible implementation manner of the first aspect, before the generating an initial sound pickup beam by using a beam forming algorithm, the method further includes: reminding, on a display screen of the recording device, a user to make a headend of the recording device face towards the target acoustic source.

With reference to the first aspect or the first possible implementation manner of the first aspect, in a second possible implementation manner of the first aspect, the adjusting the initial sound pickup beam to obtain the target sound pickup beam includes: determining a deflection angle and a deflection direction that are of the direction towards which the recording device faces; and controlling the initial sound pickup beam to deflect towards a designated adjustment direction by a designated adjustment angle, to obtain the target sound pickup beam, where the designated adjustment direction is opposite to the deflection direction, and the designated adjustment angle is the same as the deflection angle.

With reference to the second possible implementation manner of the first aspect, in a third possible implementation manner of the first aspect, the determining a deflection angle and a deflection direction that are of the direction towards which the recording device faces includes: obtaining an angular velocity that is reported by a direction sensor in the recording device when the direction towards which the recording device faces changes; and calculating the deflection angle and the deflection direction according to the angular velocity.

With reference to the second possible implementation manner of the first aspect or the third possible implementation manner of the first aspect, in a fourth possible implementation manner of the first aspect, the controlling the initial sound pickup beam to deflect towards a designated adjustment direction by a designated adjustment angle, to obtain the target sound pickup beam includes: determining, according to the initial pointing direction of the initial sound pickup beam, the deflection angle and the deflection direction, a post-deflection pointing direction of the initial sound pickup beam; adjusting the post-deflection pointing direction towards the designated adjustment direction by the designated adjustment angle, to obtain a target pointing direction; and generating the target sound pickup beam pointing towards the target pointing direction.

With reference to any one of the first aspect, or the first to the fourth possible implementation manners of the first aspect, in a fifth possible implementation manner of the first aspect, the detecting that a direction towards which the recording device faces changes is specifically: detecting that the direction towards which the recording device faces changes and that a change value exceeds a preset range.

According to a second aspect, an embodiment of the present invention further provides a directional recording apparatus, where a recording device collects a voice of a target acoustic source by using a microphone array of the recording device, and the apparatus includes: a generation unit, configured to generate an initial sound pickup beam by using a beam forming algorithm, where the initial sound pickup beam points towards the target acoustic source; a recording unit, configured to record an initial pointing direction of the initial sound pickup beam; and an adjustment unit, configured to adjust, according to a change of a direction towards which the recording device faces after detecting that the direction towards which the recording device faces changes, the initial sound pickup beam to obtain a target sound pickup beam, where the target sound pickup beam points towards the target acoustic source; and after a change of a direction towards which the recording device faces, adjust a pointing direction of the initial sound pickup beam to obtain a target sound pickup beam, where a pointing direction of the target sound pickup beam is the same as the initial pointing direction of the initial sound pickup beam.

With reference to the second aspect, in a first possible implementation manner of the second aspect, the apparatus further includes: a reminding unit, configured to remind, on a display screen of the recording device, a user to make a headend of the recording device face towards the target acoustic source.

With reference to the second aspect or the first possible implementation manner of the second aspect, in a second possible implementation manner of the second aspect, the adjustment unit includes: a determining subunit, configured to determine, after detecting that the direction towards which the recording device faces changes, a deflection angle and a deflection direction that are of the direction towards which the recording device faces; a control subunit, configured to control the initial sound pickup beam to deflect towards a designated adjustment direction by a designated adjustment angle, to obtain the target sound pickup beam, where the designated adjustment direction is opposite to the deflection direction, and the designated adjustment angle is the same as the deflection angle.

With reference to the second possible implementation manner of the second aspect, in a third possible implementation manner of the second aspect, the determining subunit includes: an angular velocity obtaining subunit, configured to obtain an angular velocity that is reported by a direction sensor in the recording device when the direction towards which the recording device faces changes; and a deflection angle calculation subunit, configured to calculate the deflection angle and the deflection direction according to the angular velocity.

With reference to the second possible implementation manner of the second aspect or the third possible implementation manner of the second aspect, in a fourth possible implementation manner of the second aspect, the control subunit includes: a post-deflection pointing direction determining subunit, configured to determine, according to the initial pointing direction of the initial sound pickup beam, the deflection angle and the deflection direction, a post-deflection pointing direction of the initial sound pickup beam; a target pointing direction determining subunit, configured to adjust the post-deflection pointing direction towards the designated adjustment direction by the designated adjustment angle, to obtain a target pointing direction; and a sound pickup beam generation subunit, configured to generate the target sound pickup beam pointing towards the target pointing direction.

With reference to any one of the second aspect, or the first to the fourth possible implementation manners of the second aspect, in a fifth possible implementation manner of the second aspect, the detecting that a direction towards which the recording device faces changes is specifically: detecting that the direction towards which the recording device faces changes and that a change value exceeds a preset range.

According to a third aspect, an embodiment of the present invention further provides a recording device, and the recording device includes: a processor, a memory, a microphone array, and a direction sensor, where the recording device collects a voice of a target acoustic source by using the microphone array of the recording device; the processor is configured to generate an initial sound pickup beam by using a beam forming algorithm, where the initial sound pickup beam points towards the target acoustic source; the memory is configured to record an initial pointing direction of the initial sound pickup beam; and the processor is further configured to adjust, according to a change of a direction towards which the recording device faces after detecting that the direction towards which the recording device faces changes, the initial sound pickup beam to obtain a target sound pickup beam, where the target sound pickup beam points towards the target acoustic source.

With reference to the third aspect, in a first possible implementation manner of the third aspect, the processor is further configured to remind, on a display screen of the recording device, a user to make a headend of the recording device face towards the target acoustic source.

With reference to the third aspect or the first possible implementation manner of the third aspect, in a second possible implementation manner of the third aspect, the processor is further configured to: determine a deflection angle and a deflection direction that are of the direction towards which the recording device faces; and control the initial sound pickup beam to deflect towards a designated adjustment direction by a designated adjustment angle, to obtain the target sound pickup beam, where the designated adjustment direction is opposite to the deflection direction, and the designated adjustment angle is the same as the deflection angle.

With reference to the second possible implementation manner of the third aspect, in a third possible implementation manner of the third aspect, the processor is further configured to obtain an angular velocity that is reported by a direction sensor in the recording device when the direction towards which the recording device faces changes; and calculate the deflection angle and the deflection direction according to the angular velocity.

With reference to the second possible implementation manner of the third aspect or the third possible implementation manner of the third aspect, in a fourth possible implementation manner of the third aspect, the processor is further configured to: determine, according to the initial pointing direction of the initial sound pickup beam, the deflection angle and the deflection direction, a post-deflection pointing direction of the initial sound pickup beam; adjust the post-deflection pointing direction towards the designated adjustment direction by the designated adjustment angle, to obtain a target pointing direction; and generate the target sound pickup beam pointing towards the target pointing direction.

With reference to any one of the third aspect, or the first to the fourth possible implementation manners of the third aspect, in a fifth possible implementation manner of the third aspect, the detecting that a direction towards which the recording device faces changes is specifically: detecting that the direction towards which the recording device faces changes and that a change value exceeds a preset range.

According to a fourth aspect, an embodiment of the present invention further provides a computer readable storage medium for storing one or more programs, where the one or more programs includes an instruction; and when the instruction is executed by a recording device, the recording device performs the method according to the foregoing first aspect or any one of the possible implementation manners of the first aspect.

In the embodiments of the present invention, an initial sound pickup beam is generated by using a beam forming algorithm, where the initial sound pickup beam points towards the target acoustic source; an initial pointing direction of the initial sound pickup beam is recorded; and a change of a direction towards which the recording device faces is detected, and the initial sound pickup beam is adjusted according to the change of the direction towards which the recording device faces, to obtain a target sound pickup beam, where the target sound pickup beam points towards the target acoustic source. Compared with the prior art, according to the directional recording method and apparatus, and the recording device provided in the embodiments of the present invention, a pointing direction of a sound pickup beam can be adjusted according to a change of a direction towards which the recording device faces, thereby ensuring that the sound pickup beam is always pointing towards a target acoustic source, and avoiding that a recording effect is deteriorated because of the change of the direction towards which the recording device faces.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, a person of ordinary skill in the art may still derive other drawings from these accompanying drawings without creative efforts.
FIG. 1 is a schematic diagram of a headend of a recording device and a direction towards which the recording device faces according to the present invention;
FIG. 2 is a flowchart of an embodiment of a directional recording method according to the present invention;
FIG. 3 is a schematic diagram of a relationship between a direction towards which a recording device faces and a target acoustic source according to the present invention;
FIG. 4 is a schematic diagram of a relationship between a sound pickup beam and a target acoustic source according to the present invention;
FIG. 5 is another schematic diagram of a relationship between a direction towards which a recording device faces and a target acoustic source according to the present invention;
FIG. 6 is another schematic diagram of a relationship between a sound pickup beam and a target acoustic source according to the present invention;
FIG. 7 is another schematic diagram of a relationship between a sound pickup beam and a target acoustic source according to the present invention;
FIG. 8 is another schematic diagram of a relationship between a sound pickup beam and a target acoustic source according to the present invention;
FIG. 9 is a schematic structural diagram of an embodiment of a directional recording apparatus according to the present invention; and
FIG. 10 is a schematic structural diagram of an embodiment of a recording device according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

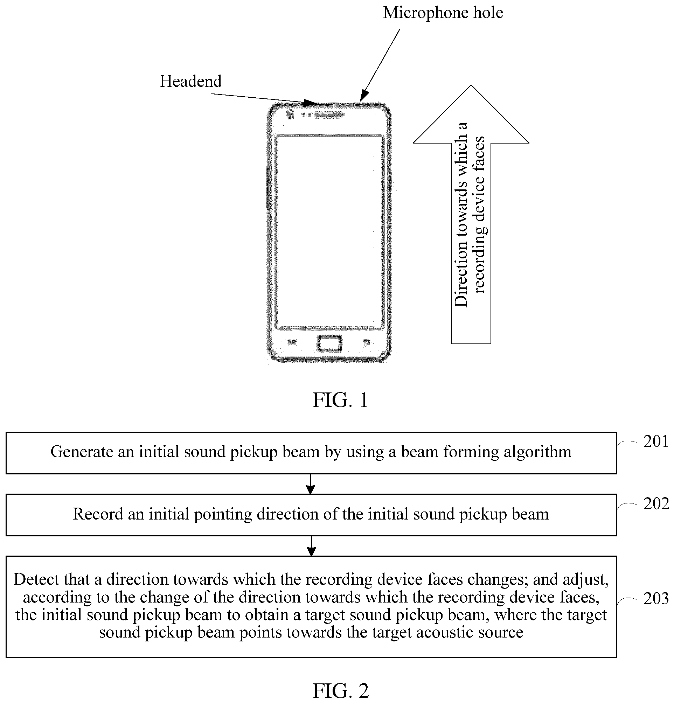

In an embodiment of the present invention, a recording device may include a specialized recording device such as a recording pen or a voice recorder, or may include a terminal having a recording function such as a mobile phone or a tablet computer. A direction towards which the recording device faces may be a pointing direction of a microphone or a microphone array in the recording device, or may be a direction towards which a headend of the recording device faces, or may be a direction towards which any axis of the recording device points or a direction corresponding to any surface of the recording device. For example, as shown in FIG. 1, when the recording device is a mobile phone, generally, an end provided with an earpiece may be used as a headend of the recording device, and a direction corresponding to a microphone hole with which the headend is provided may be used as a direction towards which the headend of the recording device faces. The microphone may be a lead microphone, or may be a noise-canceling microphone. When the recording device has a lead microphone and a noise-canceling microphone, a direction of a ray whose endpoint is the lead microphone and that passes through the noise-canceling microphone may be used as a direction towards which the recording device faces; or a direction of a ray whose endpoint is the noise-canceling microphone and that passes through the lead microphone may be used as a direction towards which the recording device faces.

In this embodiment of the present invention, a pointing direction of a beam may be a sound pickup direction when the recording device performs sound pickup by using a sound pickup beam, and may be indicated by using included angles between the pointing direction of the beam and an x-axis, a y-axis, and a z-axis of a space coordinate system. For example, a pointing direction of a beam is (a, b, c), indicating that included angles between the pointing direction of the beam and the x-axis, the y-axis, and the z-axis are respectively a, b, and c. That pointing directions of two beams are the same means that in a same space coordinate system, included angles between a pointing direction of one sound pickup beam and an x-axis, a y-axis, and a z-axis are respectively the same as included angles between a pointing direction of the other sound pickup beam and the x-axis, the y-axis, and the z-axis.

FIG. 2 is a flowchart of an embodiment of a directional recording method according to the present invention. When a recording device is controlled by using this embodiment of the present invention, the recording device collects a voice of a target acoustic source by using a microphone array of the recording device. As shown in FIG. 2, the method includes the following steps:
Step 201: Generate an initial sound pickup beam by using a beam forming algorithm, where the initial sound pickup beam points towards the target acoustic source.

Optionally, the recording device may first determine a location of the target acoustic source by means of acoustic source localization, and then determine an initial pointing direction of the initial sound pickup beam according to a location of the recording device and the location of the target acoustic source. After determining the pointing direction, the recording device may use the initial pointing direction as a direction parameter, and process, by using a beam forming algorithm, the voice collected by the microphone array, to generate the initial sound pickup beam, so that the initial sound pickup beam points towards the target acoustic source.

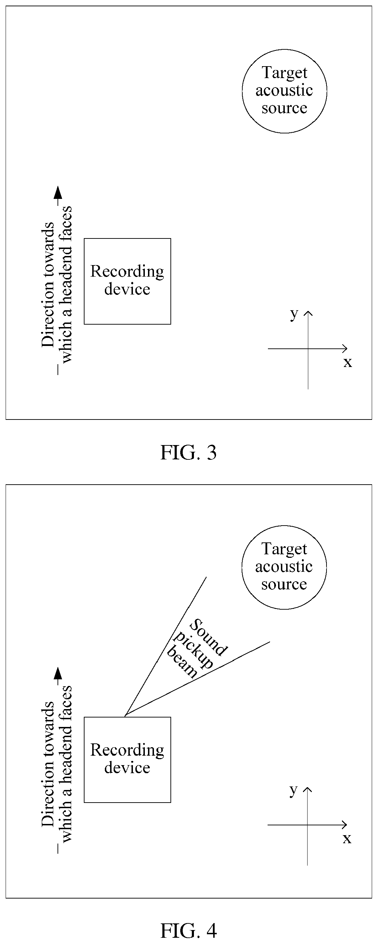

For example, FIG. 3 is a schematic diagram of a relationship between a direction towards which a recording device faces and a target acoustic source according to the present invention, and FIG. 4 is a schematic diagram of a relationship between a sound pickup beam and a target acoustic source according to the present invention. When a direction towards which the recording device faces and the target acoustic source are in a relationship shown in FIG. 3, the recording device may generate, after determining the initial pointing direction the sound pickup beam shown in FIG. 4. That is, the direction towards which the recording device faces is the same as the y-axis, and an included angle between the initial pointing direction and the y-axis is α in a clockwise direction.

Optionally, the recording device may remind, on a display screen of the recording device before enabling a directional recording function, a user to adjust the pointing direction of the recording device, to make a headend of the recording device face towards the target acoustic source. After the headend faces towards the target acoustic source, the recording device may use a direction towards which the headend faces as a direction parameter, and process, by using a beam forming algorithm, a voice collected by the microphone array, to generate an initial sound pickup beam, so that the initial sound pickup beam points towards the target acoustic source.

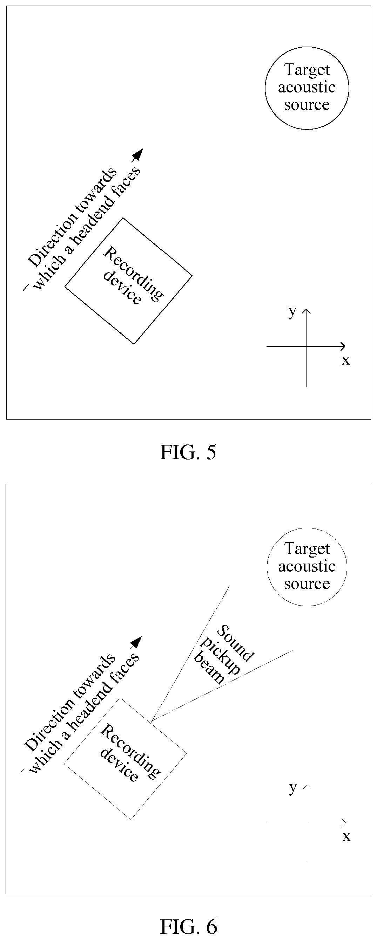

For example, FIG. 5 is another schematic diagram of a relationship between a direction towards which a recording device faces and a target acoustic source according to the present invention, and FIG. 6 is another schematic diagram of a relationship between a sound pickup beam and a target acoustic source according to the present invention. When a direction towards which the recording device faces and the target acoustic source are in a relationship shown in FIG. 3, the recording device may be first adjusted, so that the recording device faces towards the target acoustic source, and therefore the direction towards which the recording device faces and the target acoustic source are in the relationship shown in FIG. 5. Then the recording device may generate an initial sound pickup beam shown in FIG. 6. That is, the direction towards which the recording device faces is the same as an initial pointing direction of the initial sound pickup beam, and an included angle between the initial pointing direction and the y-axis is α in a clockwise direction.

In a conference or lecture, a spokesman generally makes a statement or speech at a spokesman location in a site. The spokesman location in the site is a reserved location that is preset and invariant, and therefore before the spokesman starts to make a statement, the direction towards which the recording device faces may be adjusted in advance, so that the recording device faces towards the reserved location. After facing towards the reserved location, the recording device may directly use the direction towards which the recording device faces as a direction parameter, and generate an initial sound pickup beam by using the beam forming algorithm, so as to avoid a delay caused by determining an initial pointing direction of the initial sound pickup beam by means of acoustic source localization.

Step 202: Record an initial pointing direction of the initial sound pickup beam.

After the initial sound pickup beam is formed, the recording device records the initial pointing direction of the initial sound pickup beam. For different generation manners of the initial sound pickup beam, the initial pointing direction may be the same as a direction towards which the recording device faces when generating the initial sound pickup beam, or there may be an invariant angle difference α between the initial pointing direction and a direction towards which the recording device faces when generating the initial sound pickup beam.

For example, in the case shown in FIG. 4, there is an angle difference α between the initial pointing direction of the initial sound pickup beam and a direction towards which the recording device faces when generating the initial sound pickup beam. In the case shown in FIG. 6, the initial pointing direction of the initial sound pickup beam is the same as a direction towards which the recording device faces when generating the initial sound pickup beam.

Step 203: Detect that a direction towards which the recording device faces changes; and adjust, according to the change of the direction towards which the recording device faces, the initial sound pickup beam to obtain a target sound pickup beam, where the target sound pickup beam points towards the target acoustic source.

The recording device may detect whether the direction towards which the recording device faces changes; and adjust, after detecting that the direction towards which the recording device faces changes, a pointing direction of the initial sound pickup beam to obtain a target sound pickup beam, so that the target sound pickup beam points towards the target acoustic source. Whether there is a change of the direction towards which the recording device faces may be determined according to information reported by a direction sensor. The direction sensor may include a south-pointing needle, a compass, a gyroscope, and the like. To avoid that the recording device adjusts the initial sound pickup beam because of a tiny change of the direction towards which the recording device faces, the recording device may adjust, only after detecting that the direction towards which the recording device faces changes and that a change value exceeds a preset range, the initial sound pickup beam to obtain the target sound pickup beam.

After detecting that the direction towards which the recording device faces changes, the recording device may determine a deflection angle and a deflection direction that are of the direction towards which the recording device faces; and then control the initial sound pickup beam to deflect towards a designated adjustment direction by a designated adjustment angle, to obtain the target sound pickup beam, where the designated adjustment direction is opposite to the deflection direction, and the designated adjustment angle is the same as the deflection angle.

When determining the deflection angle and the deflection direction that are of the direction towards which the recording device faces, the recording device may directly obtain a deflection angle and a deflection direction that are reported by the direction sensor; or, the recording device may obtain an angular velocity that is reported by the direction sensor when the direction towards which the recording device faces changes, and then perform calculation according to the angular velocity, so as to calculate the deflection angle and the deflection direction that are of the direction towards which the recording device faces.

When controlling the initial sound pickup beam to deflect towards the designated adjustment direction by the designated adjustment angle, because of a particular angle difference between the initial sound pickup beam and a direction towards which the recording device faces, the recording device may first determine, according to the deflection angle and the deflection direction that are of the direction towards which the recording device faces, the deflection angle and the deflection direction that are of the initial sound pickup beam, and a post-deflection pointing direction of the initial sound pickup beam; then adjust the post-deflection pointing direction towards the designated adjustment direction by the designated adjustment angle, to obtain a target pointing direction; and then generate a target sound pickup beam pointing towards the target pointing direction. When being capable of simultaneously maintaining multiple sound pickup beams, the recording device may simultaneously maintain the initial sound pickup beam and the target sound pickup beam; and may further release the initial sound pickup beam, and merely reserve the target sound pickup beam. It should be noted that, the designated adjustment direction generally includes a clockwise direction or a counterclockwise direction.

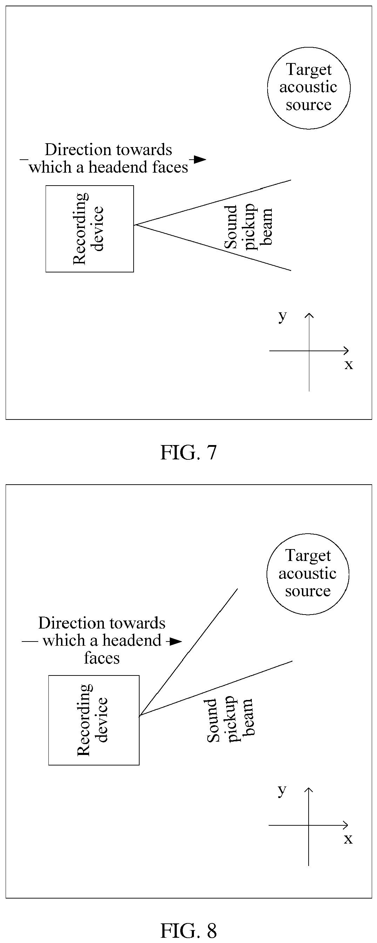

For example, FIG. 7 is another schematic diagram of a relationship between a sound pickup beam and a target acoustic source according to the present invention. The direction towards which the recording device faces before changing is shown in FIG. 6, and the direction towards which the recording device faces after changing is shown in FIG. 7. As shown in FIG. 6, the initial pointing direction of the initial sound pickup beam and the direction towards which the recording device faces are the same, and an included angle between either of the initial pointing direction of the initial sound pickup beam and the direction towards which the recording device faces, and the y-axis is α in a clockwise direction. Therefore, as shown in FIG. 7, after the direction towards which the recording device faces deflects clockwise by β, the initial sound pickup beam also deflects clockwise by β. In this case, an included angle between the post-deflection pointing direction of the initial sound pickup beam and the y-axis is α+β in the clockwise direction.

FIG. 8 is another schematic diagram of a relationship between a sound pickup beam and a target acoustic source according to the present invention. A target pointing direction is obtained by adjusting a post-deflection pointing direction of an initial sound pickup beam towards a counterclockwise direction by β, and therefore an included angle between the target pointing direction and a y-axis is also α in a clockwise direction. Therefore, a generated target sound pickup beam may be shown in FIG. 8. The included angle between a pointing direction of the target sound pickup beam and the y-axis is α in the clockwise direction, and therefore the pointing direction of the target sound pickup beam is the same as an initial pointing direction of the initial sound pickup beam, so that the target sound pickup beam points towards the target acoustic source.

It should be noted herein that, in actual use, the sound pickup beam is generally conical. For convenience of description, top views are used for description of the present invention from FIG. 3 to FIG. 8. It should be further noted that, a change of the direction towards which the recording device faces in three-dimensional space may be converted, by means of coordinate system conversion, into a change of the direction towards which the recording device faces in one or more two-dimensional planes. Therefore, a manner of generating a target sound pickup beam after a change of the direction towards which the recording device faces in three-dimensional space is similar to a manner of generating a target sound pickup beam after a change of the direction towards which the recording device faces in two-dimensional space, and details are not described herein again.

In this embodiment, an initial sound pickup beam is generated by using a beam forming algorithm, where the initial sound pickup beam points towards the target acoustic source; an initial pointing direction of the initial sound pickup beam is recorded; and a change of a direction towards which the recording device faces is detected; and the initial sound pickup beam is adjusted according to the change of the direction towards which the recording device faces, to obtain a target sound pickup beam, where the target sound pickup beam points towards the target acoustic source. By means of this embodiment, a pointing direction of a sound pickup beam can be adjusted according to a change of the direction towards which the recording device faces, thereby ensuring that the sound pickup beam is always pointing towards a target acoustic source, and avoiding that a recording effect is deteriorated because of the change of the direction towards which the recording device faces.

Corresponding to the directional recording method of the present invention, the present invention further provides a directional recording apparatus and a recording device.

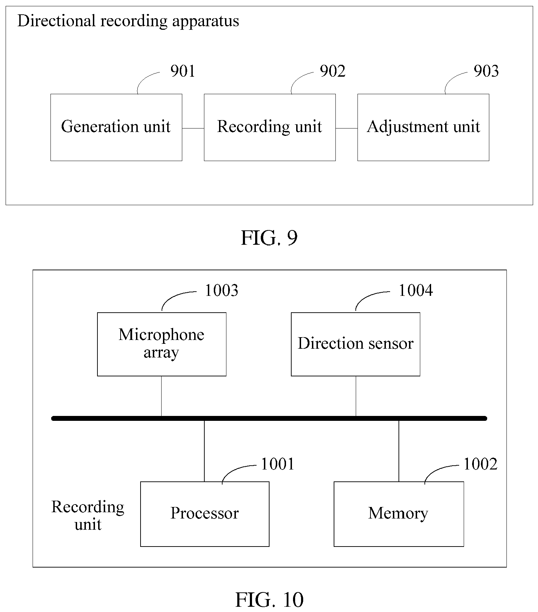

FIG. 9 is a schematic structural diagram of an embodiment of the directional recording apparatus according to the present invention. The apparatus may be disposed in the recording device.

As shown in FIG. 9, the apparatus may include a generation unit 901, a recording unit 902, and an adjustment unit 903.

The generation unit 901 is configured to generate an initial sound pickup beam by using a beam forming algorithm, where the initial sound pickup beam points towards the target acoustic source; the recording unit 902 is configured to record an initial pointing direction of the initial sound pickup beam; and the adjustment unit 903 is configured to adjust, according to a change of a direction towards which the recording device faces after detecting that the direction towards which the recording device faces changes, the initial sound pickup beam to obtain a target sound pickup beam, where the target sound pickup beam points towards the target acoustic source.

Optionally, the apparatus further includes: a reminding unit, configured to remind, on a display screen of the recording device, a user to make a headend of the recording device face towards the target acoustic source.

Optionally, the adjustment unit 903 includes: a determining subunit, configured to determine, after detecting that the direction towards which the recording device faces changes, a deflection angle and a deflection direction that are of the direction towards which the recording device faces; a control subunit, configured to control the initial sound pickup beam to deflect towards a designated adjustment direction by a designated adjustment angle, to obtain the target sound pickup beam, where the designated adjustment direction is opposite to the deflection direction, and the designated adjustment angle is the same as the deflection angle.

Optionally, the determining subunit includes: an angular velocity obtaining subunit, configured to obtain an angular velocity that is reported by a direction sensor in the recording device when the direction towards which the recording device faces changes; and a deflection angle calculation subunit, configured to calculate the deflection angle and the deflection direction according to the angular velocity.

Optionally, the control subunit includes: a post-deflection pointing direction determining subunit, configured to determine, according to the initial pointing direction of the initial sound pickup beam, the deflection angle and the deflection direction, a post-deflection pointing direction of the initial sound pickup beam; a target pointing direction determining subunit, configured to adjust the post-deflection pointing direction towards the designated adjustment direction by the designated adjustment angle, to obtain a target pointing direction; and a sound pickup beam generation subunit, configured to generate the target sound pickup beam pointing towards the target pointing direction.

By means of this embodiment, a pointing direction of a sound pickup beam can be adjusted according to a change of the direction towards which the recording device faces, thereby ensuring that the sound pickup beam is always pointing towards a target acoustic source, and avoiding that a recording effect is deteriorated because of the change of the direction towards which the recording device faces.

FIG. 10 is a schematic structural diagram of an embodiment of the recording device according to the present invention.

As shown in FIG. 10, the recording device may include a processor 1001, a memory 1002, a microphone array 1003, and a direction sensor 1004. The components perform communication by using one or more buses. A person skilled in the art may understand that the structure of the terminal shown in the figure does not constitute a limitation to the present invention and may be a bus-form structure or a star-form structure, and the terminal may further include more components or fewer components than those shown in the figure, or some components may be combined, or a different component deployment may be used.

The processor 1001 is a control center of the terminal, uses various interfaces and lines to connect various parts of the entire terminal, and executes various functions of the terminal and/or processes data by running or executing software programs and/or modules stored in the memory 1002 and invoking data stored in the memory 1002. The processor 1001 may include an integrated circuit (Integrated Circuit, IC for short), for example, may include a single packaged IC, or may include multiple successive packaged ICs that have same functions or different functions. For example, the processor 1001 may include only a central processing unit (Central Processing Unit, CPU for short), or may be a combination of a GPU, a digital signal processor (Digital Signal Processor, DSP for short), and a control chip (such as a baseband chip) in a communications unit. In an implementation manner of the present invention, the CPU may be a single computing core or may include multiple computing cores.

The memory 1002 may be configured to store a software program and module, and the processor 1001 runs the software program and module that are stored in the memory 1002, so as to perform various function applications of the terminal and implement data processing. The memory 1002 mainly includes a program storage area and a data storage area. The program storage area may store an operating system, an application program required by at least one function, such as a sound playback program and an image playback program. The data storage area may store data (such as audio data and an address book) created according to use of the terminal and the like. In a specific implementation manner of the present invention, the memory 1002 may include a volatile memory, such as a nonvolatile dynamic random access memory (Nonvolatile Random Access Memory, NVRAM for short), a phase change random access memory (Phase Change RAM, PRAM for short), or a magnetoresistive random access memory (Magetoresistive RAM, MRAM for short), or may include a nonvolatile memory, such as at least one magnetic storage device, an electrically erasable programmable read-only memory (Electrically Erasable Programmable Read-Only Memory, EEPROM for short), or a flash memory, for example, a NOR flash memory (NOR flash memory) or a NAND flash memory (NAND flash memory). The nonvolatile memory stores an operating system and an application program that are executed by the processor 1001. The processor 1001 loads a running program and data from the nonvolatile memory to a memory, and stores digital content in a large scale storage apparatus. The operating system is used for control and management of regular system tasks, such as memory management, storage device control, and power management, and various components and/or drivers that facilitate communication between various types of software and hardware. In an implementation manner of the present invention, the operating system may be the Android system of the Google company, the iOS system developed by the Apple company, or the Windows operating system developed by the Microsoft company, or may be a built-in operating system such as Vxworks.

The microphone array (also referred to as the microphone) 1003 is configured to convert a sound signal into an electrical signal, and transmit the electrical signal to the processor 1001.

The direction sensor 1004 is configured to detect changes of a location and attitude of the recording device, and provide detected information to the processor 1001.

Optionally, the recording device may further include a communications unit. The communications unit is configured to establish a communication channel, so that the terminal is connected to a remote server by using the communication channel, and data may be transmitted to the remote server, or media data may be downloaded from the remote server. The communications unit may include a communications module such as a wireless local area network (Wireless Local Area Network, wireless LAN for short) module, a Bluetooth module, or a baseband (Base Band) module, and a radio frequency (Radio Frequency, RF for short) circuit corresponding to the communications module, and is configured to perform wireless local area network communication, Bluetooth communication, infrared communication, and/or cellular communication system communication, for example, wideband code division multiple access (Wideband Code Division Multiple Access, W-CDMA for short) and/or high speed downlink packet access (High Speed Downlink Packet Access, HSDPA for short). The communications module is configured to control communication between components of the terminal, and can support direct memory access (Direct Memory Access)

In this embodiment of the present invention, the processor 1001 may be configured to generate an initial sound pickup beam by using a beam forming algorithm, where the initial sound pickup beam points towards the target acoustic source; the memory 1002 may be configured to record an initial pointing direction of the initial sound pickup beam; and the processor 1001 is further configured to adjust, according to a change of a direction towards which the recording device faces after detecting that the direction towards which the recording device faces changes, the initial sound pickup beam to obtain a target sound pickup beam, where the target sound pickup beam points towards the target acoustic source. The detecting that the direction towards which the recording device faces changes may be specifically: detecting that the direction towards which the recording device faces changes and that a change value exceeds a preset range.

Optionally, the processor 1001 is further configured to remind, on a display screen of the recording device, a user to make a headend of the recording device face towards the target acoustic source.

Optionally, the processor 1001 is further configured to: determine a deflection angle and a deflection direction that are of the direction towards which the recording device faces; and control the initial sound pickup beam to deflect towards a designated adjustment direction by a designated adjustment angle, to obtain the target sound pickup beam, where the designated adjustment direction is opposite to the deflection direction, and the designated adjustment angle is the same as the deflection angle.

Optionally, the processor 1001 is further configured to obtain an angular velocity that is reported by a direction sensor in the recording device when the direction towards which the recording device faces changes; and calculate the deflection angle and the deflection direction according to the angular velocity.

Optionally, the processor 1001 may be further configured to: determine, according to the initial pointing direction of the initial sound pickup beam, the deflection angle and the deflection direction, a post-deflection pointing direction of the initial sound pickup beam; adjust the post-deflection pointing direction towards the designated adjustment direction by the designated adjustment angle, to obtain a target pointing direction; and generate the target sound pickup beam pointing towards the target pointing direction.

During specific implementation, the present invention further provides a computer-readable storage medium. The computer-readable storage medium may store one or more programs, and when the one or more programs are executed, a part or all of the steps of the embodiments of the directional recording method provided in the present invention may be performed. The one or more programs include an instruction; and when the instruction is executed by a recording device, the recording device may perform the directional recording method in the foregoing embodiment. The storage medium may be a magnetic disk, an optical disc, a read-only memory (Read-Only Memory, ROM), a random access memory (Random Access Memory, RAM), or the like.

A person skilled in the art may clearly understand that, the technologies in the embodiments of the present invention may be implemented by software in addition to a necessary general hardware platform. Based on such an understanding, the technical solutions of the present invention essentially or the part contributing to the prior art may be implemented in a form of a software product. The software product is stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, apparatus and device embodiments are basically similar to a method embodiment, and therefore are described briefly. For related parts, refer to partial descriptions in the method embodiment.

The foregoing descriptions are implementation manners of the present invention, but are not intended to limit the protection scope of the present invention. Any modification, equivalent replacement, and improvement made without departing from the spirit and principle of the present invention shall fall within the protection scope of the present invention.

## Claims

1. A directional recording method, wherein a recording device collects a voice of a target acoustic source by using a microphone array of the recording device, and the method comprises:
generating an initial sound pickup beam by using a beam forming algorithm, wherein the initial sound pickup beam points towards the target acoustic source;
recording an initial pointing direction of the initial sound pickup beam; and
detecting that a direction towards which the recording device faces changes; and adjusting, according to the change of the direction towards which the recording device faces, the initial sound pickup beam to obtain a target sound pickup beam, wherein the target sound pickup beam points towards the target acoustic source.

2. The method according to claim 1, wherein before the generating an initial sound pickup beam by using a beam forming algorithm, the method further comprises:
reminding, on a display screen of the recording device, a user to make a headend of the recording device face towards the target acoustic source.

3. The method according to claim 1 or 2, wherein the adjusting the initial sound pickup beam to obtain the target sound pickup beam comprises:
determining a deflection angle and a deflection direction that are of the direction towards which the recording device faces; and
controlling the initial sound pickup beam to deflect towards a designated adjustment direction by a designated adjustment angle, to obtain the target sound pickup beam, wherein the designated adjustment direction is opposite to the deflection direction, and the designated adjustment angle is the same as the deflection angle.

4. The method according to claim 3, wherein the determining a deflection angle and a deflection direction that are of the direction towards which the recording device faces comprises:
obtaining an angular velocity that is reported by a direction sensor in the recording device when the direction towards which the recording device faces changes; and
calculating the deflection angle and the deflection direction according to the angular velocity.

5. The method according to claim 3 or 4, wherein the controlling the initial sound pickup beam to deflect towards a designated adjustment direction by a designated adjustment angle, to obtain the target sound pickup beam comprises:
determining, according to the initial pointing direction of the initial sound pickup beam, the deflection angle and the deflection direction, a post-deflection pointing direction of the initial sound pickup beam;
adjusting the post-deflection pointing direction towards the designated adjustment direction by the designated adjustment angle, to obtain a target pointing direction; and
generating the target sound pickup beam pointing towards the target pointing direction.

6. The method according to any one of claims 1 to 5, wherein the detecting that a direction towards which the recording device faces changes is specifically:
detecting that the direction towards which the recording device faces changes and that a change value exceeds a preset range.

7. A directional recording apparatus, wherein a recording device collects a voice of a target acoustic source by using a microphone array of the recording device, and the apparatus comprises:
a generation unit, configured to generate an initial sound pickup beam by using a beam forming algorithm, wherein the initial sound pickup beam points towards the target acoustic source;
a recording unit, configured to record an initial pointing direction of the initial sound pickup beam; and
an adjustment unit, configured to adjust, according to a change of a direction towards which the recording device faces after detecting that the direction towards which the recording device faces changes, the initial sound pickup beam to obtain a target sound pickup beam, wherein the target sound pickup beam points towards the target acoustic source.

8. The apparatus according to claim 7, wherein the apparatus further comprises:
a reminding unit, configured to remind, on a display screen of the recording device, a user to make a headend of the recording device face towards the target acoustic source.

9. The apparatus according to claim 7 or 8, wherein the adjustment unit comprises:
a determining subunit, configured to determine, after detecting that the direction towards which the recording device faces changes, a deflection angle and a deflection direction that are of the direction towards which the recording device faces; and
a control subunit, configured to control the initial sound pickup beam to deflect towards a designated adjustment direction by a designated adjustment angle, to obtain the target sound pickup beam, wherein the designated adjustment direction is opposite to the deflection direction, and the designated adjustment angle is the same as the deflection angle.

10. The apparatus according to claim 9, wherein the determining subunit comprises:
an angular velocity obtaining subunit, configured to obtain an angular velocity that is reported by a direction sensor in the recording device when the direction towards which the recording device faces changes; and
a deflection angle calculation subunit, configured to calculate the deflection angle and the deflection direction according to the angular velocity.

11. The apparatus according to claim 9 or 10, wherein the control subunit comprises:
a post-deflection pointing direction determining subunit, configured to determine, according to the initial pointing direction of the initial sound pickup beam, the deflection angle and the deflection direction, a post-deflection pointing direction of the initial sound pickup beam;
a target pointing direction determining subunit, configured to adjust the post-deflection pointing direction towards the designated adjustment direction by the designated adjustment angle, to obtain a target pointing direction; and
a sound pickup beam generation subunit, configured to generate the target sound pickup beam pointing towards the target pointing direction.

12. The apparatus according to any one of claims 7 to 11, wherein the detecting that a direction towards which the recording device faces changes is specifically:
detecting that the direction towards which the recording device faces changes and that a change value exceeds a preset range.

13. A recording device, comprising a processor, a memory, a microphone array, and a direction sensor, wherein the recording device collects a voice of a target acoustic source by using the microphone array of the recording device; and
the processor is configured to generate an initial sound pickup beam by using a beam forming algorithm, wherein the initial sound pickup beam points towards the target acoustic source;
the memory is configured to record an initial pointing direction of the initial sound pickup beam; and
the processor is further configured to adjust, according to a change of a direction towards which the recording device faces after detecting that the direction towards which the recording device faces changes, the initial sound pickup beam to obtain a target sound pickup beam, wherein the target sound pickup beam points towards the target acoustic source.

14. The recording device according to claim 13, wherein
the processor is further configured to remind, on a display screen of the recording device, a user to make a headend of the recording device face towards the target acoustic source.

15. The recording device according to claim 13 or 14, wherein
the processor is further configured to: determine a deflection angle and a deflection direction that are of the direction towards which the recording device faces; and control the initial sound pickup beam to deflect towards a designated adjustment direction by a designated adjustment angle, to obtain the target sound pickup beam, wherein the designated adjustment direction is opposite to the deflection direction, and the designated adjustment angle is the same as the deflection angle.

16. The recording device according to claim 15, wherein
the processor is further configured to: obtain an angular velocity that is reported by a direction sensor in the recording device when the direction towards which the recording device faces changes; and calculate the deflection angle and the deflection direction according to the angular velocity.

17. The recording device according to claim 15 or 16, wherein
the processor is further configured to: determine, according to the initial pointing direction of the initial sound pickup beam, the deflection angle and the deflection direction, a post-deflection pointing direction of the initial sound pickup beam; adjust the post-deflection pointing direction towards the designated adjustment direction by the designated adjustment angle, to obtain a target pointing direction; and generate the target sound pickup beam pointing towards the target pointing direction.

18. The recording device according to any one of claims 13 to 17, wherein the detecting that a direction towards which the recording device faces changes is specifically:
detecting that the direction towards which the recording device faces changes and that a change value exceeds a preset range.

19. A computer readable storage medium for storing one or more programs, wherein the one or more programs comprises an instruction; and when the instruction is executed by a recording device, the recording device performs the method according to any one of claims 1 to 6.
